# EUROPÄISCHE PATENTSCHRIFT

(11) **EP 2 397 456 B1**
(45) Veröffentlichungstag und Bekanntmachung des Hinweises auf die Patenterteilung: **23.01.2019**
(21) Anmeldenummer: 11170109.0
(22) Anmeldetag: 16.06.2011
(51) Int. Cl.: C05F 17/02

(54) **Komposter**
Composter
Composteur

(30) Priorität: 17.06.2010 AT 10012010
(43) Veröffentlichungstag der Anmeldung: 21.12.2011
(73) Patentinhaber: Wüster, Heinrich, 6460 Imst/Tirol (AT)
(72) Erfinder: Wüster, Heinrich, 6460 Imst/Tirol (AT)
(74) Vertreter: Puchberger & Partner Patentanwälte

(56) Entgegenhaltungen:
- EP-A1- 0 606 617
- DE-A1- 2 331 622
- DE-A1- 19 530 471
- US-A- 3 947 357

## Beschreibung

### Gebiet der Erfindung

Die Erfindung bezieht sich auf einen Komposter für den Garten. Der Komposter besitzt einen nach unten offenen, am Erdboden aufstehenden Behälter. An der Oberseite des Behälters ist eine durch einen Deckel verschließbare Einfüllöffnung vorgesehen. Der Behälter besitzt einen stellenweise mit Luftdurchtrittsöffnungen versehenen, äußeren Behältermantel und eine in der unteren Hälfte des Behälters angeordnete, verschließbare, seitliche Entnahmeöffnung.

### Stand der Technik

Solche Komposter werden zur Umwandlung von organischen Abfällen (Bioabfällen) im Kompost eingesetzt, wie er im Garten oder in der Landwirtschaft verwendet wird. Die Abfälle (Bioabfälle) werden im Komposter durch die Einwirkung von Sauerstoff und Bodenbakterien in Kompost bzw. in erdige Bestandteile wie Humus umgewandelt. In einem Komposter können organische Abfälle (Bioabfälle) in Kompost umgewandelt werden, die aus Haushalt, Garten, Landwirtschaft, Restaurants, Gewerbe oder Industrie stammen. Die organischen Abfälle (Bioabfälle) sind z. B. Gemüseabfälle, Obstabfälle, verblühte Blumen, Baumschnitt, Rasenschnitt etc.

Derartige Komposter werden im Garten oder an einem anderen Ort am Erdboden aufgestellt. Der nach unten offene Behälter des Komposters steht mit dem unteren Ende auf dem Erdboden. Die organischen Abfälle werden nach und nach von oben durch die Einfüllöffnung in den Behälter eingebracht. Da die in Kompost zu verwandelnden, organischen Abfälle zumeist in unterschiedlichen Zeitabständen und unterschiedlichen Mengen anfallen, werden unterschiedlich große Materialmengen in unterschiedlich großen Zeitabständen in den Behälter eingebracht. Die in den leeren Behälter eingebrachte, erste Materialmenge fällt im Behälter über die gesamte Behälterhöhe nach unten und landet auf dem Erdboden. Die später eingebrachten Materialmengen fallen im Behälter ebenfalls nach unten und landen auf der Oberseite der zuvor eingebrachten Materialmenge. Im Behälter entsteht so ein nach und nach größer werdender Komposthaufen. Dieser besteht aus übereinander angeordneten Materialmengen. Mit zunehmender Höhe des Komposthaufen werden die in seinem unteren Teil angeordneten Materialmengen durch die auf ihnen lastenden, im oberen Teil des Komposthaufens angeordneten Materialmengen immer stärker verdichtet. Die den Komposthaufen bildenden Materialmengen sind schon unterschiedlich lange im Behälter und bei ihnen ist der Prozess der Kompostierung der jeweiligen Verweildauer im Behälter entsprechend bereits unterschiedlich weit fortgeschritten. Die unterste Materialmenge des Komposthaufens liegt auf dem Erdboden auf. Sie befindet sich am längsten im Behälter und sie ist am stärksten durch das Gewicht des auf ihr lastenden Komposthaufens verdichtet. Bei dieser Materialmenge ist der Prozess der Kompostierung am weitesten fortgeschritten. Die oberste Materialmenge des Komposthaufens ist am kürzesten im Behälter. Mit jeder neu eingebrachten Materialmenge wird neues Material oben auf den Komposthaufen aufgebracht. Dadurch wird der Komposthaufen größer und die Verdichtung des Materials im unteren Teil des Komposthaufens erhöht. Der Komposthaufen verbleibt für mehrere Wochen im Behälter. Nach mehreren Wochen wird der im unteren Teil des Komposthaufens durch den Prozess der Kompostierung entstandene Kompost aus dem Behälter entnommen. Die Entnahme des Komposts erfolgt über die in der unteren Hälfte des Behälters angeordnete, seitliche Entnahmeöffnung.

An der Entnahmeöffnung kann nur der neben der Entnahmeöffnung liegende Teil des Komposthaufens entnommen werden. Zu diesem Teil des Komposthaufens können auch unverrottete organische Abfälle gehören, die mit einer neuen Materialmenge in den Behälter eingebracht wurden und die an der Oberseite des Komposthaufens entlang nach unten gekullert sind und jetzt neben der Entnahmeöffnung liegen, obwohl bei ihnen der Prozess der Kompostierung noch gar nicht begonnen hat. Diese unverrotteten organischen Abfälle werden zwangsläufig zusammen mit dem fertigen Kompost aus dem Behälter entnommen. Der entnommene Kompost muss dann vor seiner weiteren Verwendung noch z. B. mit einem Rechen von Hand aus durchgearbeitet werden, um die unverrotteten organischen Abfälle aus dem Kompost auszusondern. Die ausgesonderten, noch unverrotteten organischen Abfälle können von oben in den Behälter wieder eingefüllt werden.

Es sind Komposter bekannt, die einen zylindrischen oder pyramidenstumpfförmigen Behälter besitzen, der nach unten offen ist und mit seinem offenen, unteren Ende am Erdboden aufsteht. An der Oberseite des Behälters ist eine Einfüllöffnung vorgesehen, die durch einen Deckel verschließbar ist. In der unteren Hälfte des Behälters ist eine verschließbare, seitliche Entnahmeöffnung vorgesehen. Die Entnahmeöffnung ist im Mantel des Behälters angeordnet und reicht nach unten bis zum unteren Ende des Behälters. Der Mantel des Behälters ist mit zahlreichen Luftdurchtrittsöffnungen versehen, durch die Luft aus der Umgebung in den Behälter eindringen kann.

In diesen Kompostern läuft der Prozess der Kompostierung relativ langsam ab. Die jeweils auf einmal in den Behälter eingebrachten Materialmengen sind zumeist zu klein, um bei dem im Behälter angeordneten Komposthaufen jene Erwärmung zu erzeugen, die das Abtöten unerwünschter Bakterien und das Freisetzen der im Material enthaltenen Feuchtigkeit ermöglichen würde. Das nach und nach in den Komposter eingebrachte Material verrottet daher nur sehr langsam.

Um den Prozess der Kompostierung zu beschleunigen, wird empfohlen, den teilweise gefüllten Komposter nach einigen Wochen von Hand aus umzusetzen und das im Behälter enthaltene Material bei diesem Umsetzen gut zu durchmischen. Dafür ist aber eine für den Benutzer des Komposters sehr zeit- und arbeitsaufwändige Vorgangsweise erforderlich. Der Benutzer kann grundsätzlich zwischen zwei Vorgangsweisen wählen.

Bei der ersten Vorgangsweise bleibt der Behälter auf dem Erdboden stehen und nur der relativ große, im Behälter befindliche Komposthaufen wird umgesetzt. Dazu muss der Benutzer den relativ großen Komposthaufen zuerst durch die seitliche Entnahmeöffnung des Behälters hindurch in viele, der Größe der Entnahmeöffnung entsprechende, kleine Materialmengen aufteilen. Diese Materialmengen muss der Benutzer neben dem Behälter am Erdboden ablegen, wobei dort ein neuer Komposthaufen entsteht. Wenn der Behälter leer ist, muss der Benutzer den neben dem Behälter am Erdboden liegenden Komposthaufen wiederum in viele, diesmal der Größe der Einfüllöffnung des Behälters entsprechende, kleine Materialmengen aufteilen und diese Materialmengen nacheinander durch die Einfüllöffnung hindurch von oben in den Behälter einfüllen.

Bei der zweiten Vorgangsweise wird zuerst der Behälter und dann der relativ große Komposthaufen umgesetzt. Dazu muss der Benutzer den Behälter von dem im Behälter angeordneten, relativ großen Komposthaufen abheben und den Behälter in einiger Entfernung von diesem Komposthaufen wieder auf dem Erdboden aufstellen. Dann muss der Benutzer den relativ großen Komposthaufen in viele, der Größe der Einfüllöffnung des Behälters entsprechende, kleine Materialmengen aufteilen und diese Materialmengen nacheinander durch die Einfüllöffnung hindurch von oben in den Behälter einfüllen.

In beiden Fällen benötigt der Benutzer eine Mistgabel oder ein ähnliches Hilfsgerät, um den jeweiligen, relativ großen Komposthaufen in viele kleine Materialmengen aufzuteilen und um dann die kleinen Materialmengen von oben über die Einfüllöffnung in den leeren Behälter einzufüllen. In beiden Fällen muss ein relativ großer und relativ alter Komposthaufen umgesetzt werden. Im unteren Teil dieses Komposthaufens ist der Prozess der Kompostierung bereits sehr weit fortgeschritten, weshalb das Material im unteren Teil des Komposthaufens bereits stark verdichtet ist. Diese durch den Prozess der Kompostierung verursachte Verdichtung des Materials erschwert das manuelle Aufteilen des Komposthaufens mit Hilfe einer Mistgabel. Deshalb kann das manuelle Umsetzen des relativ großen Komposthaufens für die mit der Mistgabel arbeitende Person zur Schwerarbeit werden.

In beiden Fällen wird der Benutzer nicht nur selbst schmutzig, sondern er ist auch den mit der Verrottung des Materials verbundenen Gerüchen ausgesetzt. Zusätzlich wird der Benutzer mit den im Komposthaufen lebenden kleinen Tierchen wie Würmer, Käfer, Asseln, etc. konfrontiert. Dazu kommt noch, dass der im Behälter angeordnete Komposthaufen fliegende und kriechende Schädlinge anlockt, die durch die Luftdurchtrittsöffnungen im Behältermantel in den Behälter und zum Komposthaufen gelangen. Diese Schädlinge werden beim Einbringen einer Materialmenge in den Behälter durch das Aufklappen des die Einfüllöffnung abdeckenden Deckels aktiviert und kriechen bzw. fliegen dann vom Komposthaufen weg. Gleiches geschieht, wenn der Benutzer beim Umsetzen des Komposters den die Einfüllöffnung abdeckenden Deckel hochklappt bzw. den Komposthaufen mit Hilfe einer Mistgabel in kleine Materialmengen aufteilt und dann diese von oben in den Behälter wieder einfüllt. Durch diese Schädlinge wird nicht nur der den Deckel der Einfüllöffnung des Behälters öffnende Benutzer sowohl belästigt als auch gefährdet, sondern auch der den Komposter händisch umsetzende Benutzer In beiden Fällen sind die mit dem händischen Umsetzen des Komposters zwangsläufig verbundenen Arbeiten für den Benutzer unangenehm und auch unhygienisch.

Vorrichtungen, die Mikroorganismen zum Abbau von Abfallstoffen nutzen, sind im Stand der Technik bekannt. So beschreibt beispielsweise die EP 0 606 617 A1 ein Abfallbehandlungssystem und ein Verfahren zur Verarbeitung von Bioabfall, insbesondere von Küchenabfällen, welches ein flüssiges Medium mit Mikroorganismen enthält. Die US 3 947 357 beschreibt eine Kompostiervorrichtung mit einer einzigen Kammer, welche direkt auf den Erdboden aufgesetzt ist, um das Einwirken von Mikroorganismen zu verbessern.

### Zusammenfassung der Erfindung

Aufgabe der Erfindung ist es, einen neuen Komposter anzugeben, der mit seinem Behälter auf dem Erdboden aufgestellt wird und in dem organische Abfälle (Bioabfall) durch die Einwirkung von Sauerstoff und Bodenbakterien in Kompost bzw. in erdige Bestandteile wie Humus umgewandelt werden.

Zur Lösung dieser Aufgabe schlägt die Erfindung einen neuen Komposter vor. Dieser besitzt einen nach unten offenen, am Erdboden aufstehenden Behälter. An der Oberseite des Behälters ist eine Einfüllöffnung angeordnet, die durch einen Deckel verschließbar ist. Im Behälter ist eine durch einen Boden nach unten abgeschlossene obere Kammer vorgesehen, die unterhalb der Einfüllöffnung angeordnet ist und einen im Behälter angeordneten, seitlichen Auslass besitzt. Im Behälter ist eine erste Kompostierungskammer vorgesehen, die als ein belüfteter, vertikaler Schacht ausgebildet ist, der sich vom oberen Ende des Behälters weg am seitlichen Auslass der oberen Kammer vorbei nach unten erstreckt und an seinem, unteren Schachtende durch eine horizontal angeordnete, untere Platte begrenzt wird, die zum Entleeren des Schachts um eine horizontale Achse verschwenkbar ist. Der Komposter ist mit einem der unteren Platte zugeordneten Bewegungsmechanismus versehen, der mit der unteren Platte mechanisch gekoppelt ist und eine an der Außenseite des Behälters angeordnete Handhabe besitzt, mit deren Hilfe die untere Platte um eine horizontale Achse verschwenkt werden kann. Im Behälter ist eine unmittelbar über dem Erdboden angeordnete, nach unten offene, belüftete, zweite Kompostierungskammer vorgesehen, an deren Oberseite die untere Platte angeordnet ist. Der Behälter ist mit einer neben der zweiten Kompostierungskammer angeordneten, verschließbaren, seitlichen Entnahmeöffnung versehen.

Beim erfindungsgemäßen Komposter werden die organischen Abfälle (Bioabfälle) in der oberen Kammer angesammelt, bis eine größere Materialcharge entstanden ist. Die größere Materialcharge wird dann als Ganzes in die erste Kompostierungskammer eingebracht, in der die erste Phase der Kompostierung stattfindet. Die Materialcharge wird über den seitlichen Auslass der oberen Kammer in den neben der oberen Kammer angeordneten Bereich des vertikalen Schachts eingebracht. Die Materialcharge löst sich dabei in mehrere Einzelteile auf, die im Schacht frei nach unten fallen und auf der horizontal angeordneten, unteren Platte landen. Dort entsteht ein erster, oberer Materialhaufen, bei dem die erste Phase der Kompostierung stattfindet, während in der jetzt leeren, oberen Kammer eine neue, zweite Materialcharge angesammelt wird. Die zweite Materialcharge wird dann ebenfalls als Ganzes in die erste Kompostierungskammer eingebracht. Die beim Einbringen der zweiten Materialcharge entstehenden, im Schacht frei nach unten fallenden Teile der Materialcharge landen auf dem oberen Materialhaufen und bilden dort eine neue, frisch aufgeschüttete obere Materialschicht.

Während bei den im oberen Materialhaufen enthaltenen Abfällen die erste Kompostierungsphase weiterläuft, die Abfälle verrotten und im Volumen deutlich reduziert werden, wird in der jetzt leeren, oberen Kammer eine neue, dritte Materialcharge angesammelt. Wenn die obere Kammer mit der dritten Materialcharge gefüllt ist und die dritte Materialcharge in die erste Kompostierungskammer eingebracht werden soll, wird zuerst die erste Kompostierungskammer durch Verschwenken der unteren Platte in die zweite Kompostierungskammer hinein entleert. Dabei wird der obere Materialhaufen etwas durchgemischt, während er von der verschwenkten unteren Platte herunterfällt und sich dabei in mehrere Teile auflöst, die in der zweite Kompostierungskammer nach unten fallen auf dem Erdboden landen, wo ein, zweiter, unterer Materialhaufen entsteht, bei dem die zweite Phase der Kompostierung stattfindet.

Nach dem Entleeren der ersten Kompostierungskammer, wird die untere Platte in eine horizontale Lage verschwenkt. Anschließend wird die dritte Materialcharge in die erste Kompostierungskammer eingebracht, in der auf der unteren Platte ein neuer, oberer Materialhaufen entsteht. Während bei dem von der dritten Materialcharge gebildeten, neuen, oberen Materialhaufen die erste Phase der Kompostierung stattfindet, wird in der wiederum leeren, oberen Kammer eine neue, vierte Materialcharge angesammelt. Diese wird in die erste Kompostierungskammer eingebracht und bei dem neuen, oberen Materialhaufen entsteht eine neue, frisch aufgeschüttete obere Materialschicht.

Während bei den im neuen, oberen Materialhaufen enthaltenen Abfällen die erste Kompostierungsphase weiterläuft, die Abfälle verrotten und im Volumen deutlich reduziert werden, wird in der wiederum leeren, oberen Kammer eine neue, fünfte Materialcharge angesammelt. Bevor diese in die erste Kompostierungskammer eingebracht wird, wird diese ein zweites Mal durch Verschwenken der unteren Platte in die zweite Kompostierungskammer hinein entleert. Dabei wird der neue, obere Materialhaufen etwas durchgemischt, während er von der verschwenkten unteren Platte herunterfällt und sich dabei in mehrere Teile auflöst, die in der zweiten Kompostierungskammer nach unten fallen und auf dem zweiten, unteren Materialhaufen landen, der in der zweiten Kompostierungskammer am Erdboden aufliegt.

Nach dem zweiten Entleeren der ersten Kompostierungskammer wird die untere Platte wiederum in eine horizontale Lage verschwenkt. Anschließend wird die fünfte Materialcharge in die erste Kompostierungskammer eingebracht, in der auf der unteren Platte wiederum ein neuer, oberer Materialhaufen entsteht, bei dem die erste Kompostierungsphase weiterläuft, während in der leeren, oberen Kammer wieder eine neue, sechste Materialcharge angesammelt wird.

Während der ersten Kompostierungsphase strömt Luft aus der Umgebung des Komposters über im Behältermantel angeordnete Belüftungsöffnungen in die erste Kompostierungskammer ein und setzt bei den im oberen Materialhaufen enthaltenen Abfällen einen Kompostierungsprozess in Gang, durch den diese Abfälle verrotten und im Volumen deutlich reduziert werden. Die mit jeder Materialcharge in die erste Kompostierungskammer eingebrachte Menge an organischen Abfällen (Bioabfällen) reicht aus, um bei dem Kompostierungsprozess eine fühlbaren Erwärmung der Abfälle zu erzeugen, die für das Abtöten unerwünschter Bakterien und für das forcierte Freisetzen von Feuchtigkeit ausreicht.

Am Ende der ersten Kompostierungsphase wird der im Volumen deutlich verringerte, obere Materialhaufen durch Verschwenken der unteren Platte aus der ersten Kompostierungskammer nach unten in die zweite Kompostierungskammer befördert und bildet dort einen Teil des am Erdboden liegenden, unteren Materialhaufens.

In der zweiten Kompostierungskammer findet bei dem am Erdboden aufliegenden, unteren Materialhaufen die zweite Kompostierungsphase statt. Die im unteren Materialhaufen enthaltenen Abfälle werden in der zweiten Kompostierungsphase unter der Einwirkung von Sauerstoff und Bodenbakterien in Kompost bzw. in erdige Bestandteile wie Humus umgewandelt.

Der in der zweiten Kompostierungskammer entstandene Kompost wird über die neben der zweiten Kompostierungskammer angeordnete, seitliche Entnahmeöffnung aus dem Behälter bzw. aus dem Komposter entnommen.

Die Handhabung des Komposters erfolgt von Hand aus.

Das Befüllen der oberen Kammer mit organischen Abfällen (Bioabfälle) wird vom Benutzer des Komposters von Hand aus durchgeführt. Ebenso das Entleeren der oberen Kammer in die erste Kompostierungskammer hinein. Dazu kann auch eine kleine Handschaufel oder ein anderes Handgerät verwendet werden. Beim Entleeren der oberen Kammer schiebt der Benutzer die in der oberen Kammer angesammelte Materialcharge durch den seitlichen Auslass der oberen Kammer hindurch seitlich aus der oberen Kammer hinaus und gleichzeitig in den oberen Bereich der ersten Kompostierungskammer hinein, in der die Materialcharge von selbst hinunterfällt und sich in einzelne Teile auflöst.

Das Entleeren der ersten Kompostierungskammer wird ebenfalls von Hand aus durchgeführt. Dazu wird der, der unteren Platte zugeordnete und mit dieser mechanisch gekoppelte Bewegungsmechanismus an der, an der Außenseite des Behälters angeordneten Handhabe betätigt und die untere Platte um eine horizontale Achse verschwenkt. Nach dem Entleeren der ersten Kompostierungskammer wird die untere Platte über den Bewegungsmechanismus wieder von Hand aus in eine horizontale Lage verschwenkt.

Die Entnahme des Komposts aus der zweiten Kompostierungskammer des Komposters erfolgt ebenfalls von Hand aus. Dazu wird zuerst die neben der zweiten Kompostierungskammer angeordnete, seitliche Entnahmeöffnung des Komposters geöffnet. Dann wird der Kompost vom Benutzer des Komposters von Hand aus, z. B. mit Hilfe einer Schaufel, eines Rechens oder einer Mistgabel, aus der zweiten Kompostierungskammer entnommen.

In weiterer Ausgestaltung der Erfindung kann der Komposter eine im Behälter angeordnete, den vertikalen Schacht seitlich begrenzende Trennwand besitzen, die mit Luftdurchtrittsöffnungen versehen ist. Die Trennwand kann zumindest in ihrer unteren Hälfte als elastische, biegsame Platte ausgebildet sein. Die Trennwand kann um eine horizontale Achse verschwenkbar und im Behälter in einer im wesentlichen vertikalen Lage arretierbar ausgebildet sein. Am unteren Schachtende des vertikalen Schachtes kann eine Arretiereinrichtung für die verschwenkbare Trennwand vorgesehen sein. Es kann ein mit der verschwenkbaren Trennwand mechanisch gekoppelter Bewegungsmechanismus vorgesehen sein, der mit einer an der Außenseite des Behälters angeordneten Handhabe versehen ist.

In weiterer Ausgestaltung der Erfindung kann die obere Kammer einen im Behälter angeordneten, verschließbaren, seitlichen Auslass besitzen. Der seitliche Auslass kann durch einen plattenförmigen Schieber verschließbar sein, der in der oberen Kammer angeordnet und mit einem Handgriff versehen ist. Beim seitlichen Auslass der oberen Kammer kann eine diesen verschließende, schwenkbare Klappe vorgesehen sein. Beim seitlichen Auslass der oberen Kammer kann eine in ihre Schließstellung vorgespannte, schwenkbare Klappe vorgesehen sein. Beim seitlichen Auslass der oberen Kammer kann eine schwenkbare Klappe vorgesehen sein, die in einer den Auslass verschließenden Stellung arretierbar ist.

In weiterer Ausgestaltung der Erfindung kann unterhalb der Einfüllöffnung ein schachtelförmiger Einsatz vorgesehen sein, der die obere Kammer samt ihrem im Behälter angeordneten, seitlichen Auslass enthält. In dem schachtelförmigen Einsatz kann ein mit einem Handgriff versehener, plattenförmiger Schieber vorgesehen sein, mit dem der seitliche Auslass verschließbar ist. Bei dem seitlichen Auslass des schachtelförmigen Einsatzes kann eine den Auslass verschließende, schwenkbare Klappe vorgesehen sein. Die schwenkbare Klappe kann mittels einer Feder oder durch ein Gewicht in ihre Schließstellung vorgespannt sein. Die im schachtelförmigen Einsatz angeordnete, schwenkbare Klappe kann im schachtelförmigen Einsatz in ihrer Schließstellung arretierbar ausgebildet sein.

In weiterer Ausgestaltung der Erfindung kann unterhalb der Einfüllöffnung eine um eine horizontale Achse verschwenkbare Wanne vorgesehen sein, die die obere Kammer samt ihrem im Behälter angeordneten, seitlichen Auslass enthält. Die Wanne kann mit einer den seitlichen Auslass verschließenden, beweglichen Klappe versehen sein. Die bewegliche Klappe kann mittels einer Feder oder durch ein Gewicht in ihre Schließstellung vorgespannt sein.

In weiterer Ausgestaltung der Erfindung kann die untere Platte mit einer im Behälter drehbar gelagerten Achse starr verbunden sein, die einen über die Außenseite des Behälters vorstehenden Achsabschnitt besitzt, mit dem die Handhabe des Bewegungsmechanismus starr verbunden ist. Die Handhabe des Bewegungsmechanismus kann als einarmiger Hebel ausgebildet sein. Die Handhabe des Bewegungsmechanismus kann als Kurbel ausgebildet sein. Es kann eine an der Außenseite des Behälters angebrachte Arretiereinrichtung vorgesehen ist, die mit der Handhabe des Bewegungsmechanismus bei in horizontaler Lage angeordneter, unterer Platte in Eingriff bringbar ist.

In weiterer Ausgestaltung der Erfindung kann die untere Platte mit Luftdurchtrittsöffnungen versehen sein. Die untere Platte kann als Stabrost ausgebildet sein.

In weiterer Ausgestaltung der Erfindung kann der Behälter eine im Bereich des belüfteten, vertikalen Schachtes angeordnete Behälterwand besitzen, die mit verstellbaren Luftdurchtrittsöffnungen versehen ist. Zum Regeln des Querschnitts der Luftdurchtrittsöffnungen können entlang der Behälterwand verschiebbare Schieber vorgesehen sein. In der Behälterwand können drehbare Lüftungsrosetten vorgesehen sein, die durch Verdrehen den Querschnitt der in der Behälterwand angeordneten, kreisförmigen Luftdurchtrittsöffnungen regeln.

In weiterer Ausgestaltung der Erfindung wird ein Komposter vorgeschlagen, der einen nach unten offenen Behälter besitzt, der an der Oberseite mit einer durch einen Deckel verschließbaren Einfüllöffnung versehen ist und einen äußeren Behältermantel, besitzt, der mit Luftdurchtrittsöffnungen versehen ist und eine in der unteren Hälfte des Behälters angeordnete, verschließbare, seitliche Entnahmeöffnung enthält.

Dieser Komposter ist durch folgende Merkmale gekennzeichnet. Unterhalb der Einfüllöffnung ist eine nach oben offene, obere Kammer vorgesehen, die sich nur über einen Teil des Behälterquerschnitts erstreckt. Die obere Kammer ist durch einen geschlossen Boden nach unten begrenzt und an ihrem im Inneren des Behälters angeordneten, vorderen Ende mit einem verschließbaren Durchgang versehen. Der Durchgang mündet in einen neben der oberen Kammer angeordneten, oberen Bereich eines belüfteten Sammelraumes. Der belüftete Sammelraum erstreckt sich vom oberen Ende des Behälters nach unten und ist zwischen einem mit Luftdurchtrittsöffnungen versehenen Bereich des Behältermantels und einer im Inneren des Behälters angeordneten, mit Luftdurchtrittsöffnungen versehenen Trennwand angeordnet. Der belüftete Sammelraum ist auf einem gegenüber dem Boden der oberen Kammer nach unten versetzten, unteren Höhenniveau durch eine untere Platte begrenzt. Die untere Platte ist um eine horizontale Achse verschwenkbar angeordnet, in einer horizontalen Lage arretierbar und mit einem Bewegungsmechanismus gekoppelt, der den Behältermantel durchsetzt und eine außerhalb des Behälters angeordnete Handhabe besitzt. Unterhalb vom unteren Höhenniveau ist eine belüftete, nach unten offene, untere Kammer vorgesehen, die bis zum unteren Ende des Behälters nach unten reicht und an der Außenseite von einem Abschnitt des Behältermantels begrenzt ist, in dem zumindest eine verschließbare, seitliche Entnahmeöffnung angeordnet ist.

Bei dieser Ausführungsform des Komposters bildet der im Behälter angeordnete, belüftete Sammelraum die erste Kompostierungskammer des Komposters, in der die erste Phase der Kompostierung stattfindet, und die belüftete, untere Kammer, die nach unten offen ist und bis zum unteren Ende des Behälters nach unten reicht, bildet die zweite Kompostierungskammer des Komposters, in der die zweite Phase der Kompostierung stattfindet. Der die erste Kompostierungskammer bildende Sammelraum erstreckt sich vom oberen Ende des Behälters nach unten bis zum unteren Höhenniveau und wird dort durch die untere Platte nach unten begrenzt. Der Sammelraum stellt einen im Behälter angeordneten, vertikalen Schacht dar, der zwischen einem mit Luftdurchtrittsöffnungen versehenen Bereich des Behältermantels und einer im Inneren des Behälters angeordneten, mit Luftdurchtrittsöffnungen versehenen Trennwand angeordnet ist. Die unterhalb vom unteren Höhenniveau angeordnete und bis zum unteren Ende des Behälters nach unten reichende, untere Kammer ist die unmittelbar über dem Erdboden angeordnete, zweite Kompostierungskammer, in der die zweite Phase der Kompostierung stattfindet.

Bei dieser Ausführungsform des Komposters werden die organischen Abfälle (Bioabfälle) in der oberen Kammer zu größeren Materialchargen zusammengefasst, die als Ganzes in den belüfteten Sammelraum eingebracht werden. Beim Einbringen in den Sammelraum lösen sich die Materialchargen in Einzelteile auf, die im Sammelraum frei nach unten fallen und am unteren Ende des Sammelraumes auf der horizontal angeordneten, unteren Platte einen ersten Materialhaufen bilden. Im belüfteten Sammelraum findet eine erste Kompostierungsphase statt, während der die auf der unteren Platte liegenden, organischen Abfälle teilweise verrotten und im Volumen deutlich reduziert werden. Die mit jeder Materialcharge in den Sammelraum eingebrachte Menge an organischen Abfällen ist groß genug, damit die Kompostierung mit einer fühlbaren Erwärmung verbunden ist. Durch die Erwärmung wird der Prozess der Kompostierung beschleunigt und ebenso die Reduktion der Feuchtigkeit. Nach dem Einbringen von zwei oder mehreren Materialchargen in den belüfteten Sammelraum, wird der auf der unteren Platte angeordnete Materialhaufen, der aus teilweise verrotteten und im Volumen deutlich reduzierten, organischen Abfällen besteht, durch Verschwenken der unteren Platte aus dem Sammelraum entfernt und in die darunterliegende, belüftete, untere Kammer eingebracht. Der Materialhaufen rutsch von der verschwenkten, schräg stehenden, unteren Platte herunter und löst sich in seine Einzelteile auf, die in der unteren Kammer frei nach unten fallen, auf den die untere Kammer nach unten abschließenden Erdboden fallen und dort einen neuen Materialhaufen bilden.

Nach dem Entleeren des belüfteten Sammelraumes wird die untere Platte wieder in ihre horizontale Lage verschwenkt. Jetzt können wieder nacheinander zwei oder mehrere Materialcharge in den Sammelraum eingebrachten werden. Die Materialchargen lösen sich im Sammelraum in ihre Einzelteile auf. Diese fallen im Sammelraum frei nach unten und bilden auf der unteren Platte einen neuen Materialhaufen, der aus teilweise verrotteten und im Volumen deutlich reduzierten, organischen Abfällen besteht. Der neue Materialhaufen wird ebenfalls durch Verschwenken der unteren Platte aus dem Sammelraum entfernt und in die darunterliegende, belüftete, untere Kammer eingebracht. Der neue Materialhaufen rutsch ebenfalls von der verschwenkten, schräg stehenden, untere Platte herunter und löst sich in seine Einzelteile auf. Diese fallen in der unteren Kammer frei nach unten und auf den bereits am Erdboden liegenden Materialhaufen drauf.

In der unteren Kammer werden die im belüfteten Sammelraum teilweise verrotteten und im Volumen deutlich reduzierten, organischen Abfälle in einer zweiten Kompostierungsphase unter der Einwirkung von Sauerstoff und Bodenbakterien in Kompost bzw. in erdige Bestandteile wie Humus umgewandelt.

Die in der oberen Kammer entstehenden Materialchargen sind größere Mengen an organischen Abfällen, die in der oberen Kammer auf dem Boden der oberen Kammer weitgehend lose nebeneinander liegen. Die Materialchargen werden durch Entleeren der oberen Kammer in den Sammelraum eingebracht. Das Entleeren der oberen Kammer in den belüfteten Sammelraum hinein wird vom Benutzer des Komposters von Hand aus z. B. mittels einer kleinen Handschaufel durchgeführt.

Beim Entleeren der oberen Kammer werden die Materialchargen jeweils über das im Behälter angeordnete vordere Ende des Bodens der oberen Kammer hinaus geschoben und gleichzeitig in den leeren oberen Bereich des Sammelraumes hinein befördert, wo jede mechanische Unterstützung für die innerhalb der Materialcharge weitgehend lose nebeneinander liegenden, organischen Abfälle fehlt. Beim Eintreten in den Sammelraum löst sich daher jede Materialcharge in ihr Einzelteile auf, die im Sammelraum frei nach unten fallen und am unteren Ende des Sammelraumes von der dort horizontal angeordneten, unteren Platte aufgefangen werden. Auf der unteren Platte bilden die im freien Fall nach unten gefallenen, organischen Abfälle einen frisch aufgeschütteten Materialhaufen.

Die obere Kammer wird in größeren Zeitabständen immer wieder in den belüfteten Sammelraum hinein entleert. Dabei löst sich jeweils die über das im Behälter angeordnete vordere Ende des Bodens der oberen Kammer hinaus geschobene Materialcharge in ihr Einzelteile auf, die im Sammelraum frei nach unten fallen und bei dem auf der unteren Platte liegenden Materialhaufen eine frisch aufgeschüttete, neue obere Schicht bilden.

In der oberen Kammer werden die unregelmäßig und in kleineren Mengen anfallenden, organischen Abfälle gesammelt bis sie eine die obere Kammer weitgehend ausfüllende Materialcharge bilden. Für diesen Sammelvorgang ist zumeist eine längerer Zeitraum erforderlich, während dem Material von Hand aus in die obere Kammer eingebracht wird. Während dieses längeren Zeitraumes wird kein weiteres Material in den Sammelraum eingebracht, aber bei den bereits auf der unteren Platte liegenden, organischen Abfällen schreitet die erste Kompostierungsphase weiter fort.

Der fertige Kompost wird aus der unteren Kammer entnommen. Dazu wird die im Behältermantel angeordnete seitliche Entnahmeöffnung geöffnet und der Kompost durch diese Entnahmeöffnung hindurch aus dem Behälter entnommen.

Gemäß einem weiteren Merkmal der Erfindung kann vorgesehen sein, dass in der unterhalb der Einfüllöffnung angeordneten, nach oben offenen, oberen Kammer ein mit einem Handgriff versehener, plattenförmiger Schieber angeordnet ist, der in seiner vordersten Stellung den am vorderen Ende der oberen Kammer angeordneten Durchgang verschließt.

Bei dieser Ausbildung des Komposters kann der Benutzer den Inhalt der oberen Kammer mit Hilfe des plattenförmigen Schiebers aus der oberen Kammer hinaus schieben und dadurch in den belüfteten Sammelraum hinein befördern. Am Ende dieser Ausschiebebewegung kommt der Benutzer mit dem plattenförmigen Schieber bei dem am vorderen Ende der oberen Kammer angeordneten Durchgang an und kann diesen gleich mit dem plattenförmigen Schieber verschließen, der in seiner Schließstellung in der oberen Kammer verbleibt. Die obere Kammer wird dann hinter der den Durchgang verschließenden Platte des Schiebers mit organischen Abfällen gefüllt.

Der plattenförmige Schieber kann mit einer in der oberen Kammer vertikal angeordneten Platte versehen sein, von der eine Stange senkrecht absteht, die an ihrem Ende einen Handgriff trägt.

In weiterer Ausgestaltung der Erfindung kann am vorderen Ende der oberen Kammer ein mit einem Durchgang versehenes Wandelement angeordnet sein.

Bei einem Komposter, bei dem in der oberen Kammer ein plattenförmiger Schieber angeordnet ist, schiebt der Benutzer den Inhalt der oberen Kammer mit Hilfe des Schiebers aus der oberen Kammer hinaus. Der Benutzer stößt am Ende der Ausschiebebewegung mit dem Schieber gegen das Wandelement und verschließt dabei mit der Platte des Schiebers den Durchgang im Wandelement. Der Benutzer belässt dann den Schieber in dieser Stellung in der oberen Kammer, die dann hinter der Platte des Schiebers mit organischen Abfällen gefüllt wird.

In weiterer Ausgestaltung der Erfindung kann am vorderen Ende der oberen Kammer ein mit einem Durchgang versehenes Wandelement angeordnet sein, das eine den Durchgang verschließende, bewegliche Klappe trägt.

Bei dieser Ausbildung des Komposters wird der Inhalt der oberen Kammer durch den Durchgang hindurch aus der oberen Kammer hinaus geschoben. Dabei wird die bewegliche Klappe durch die organischen Abfälle verschwenkt und der Durchgang wird freigegeben. Wenn die obere Kammer leer ist, schwenkt die bewegliche Klappe in ihre Ausgangsstellung zurück und verschließt den Durchgang.

Erfindungsgemäß kann die bewegliche Klappe über ein an ihrem oberen Ende angeordnetes Filmscharnier mit dem Wandelement schwenkbar verbunden sein.

In weiterer Ausgestaltung der Erfindung kann vorgesehen sein, dass die obere Kammer und der am vorderen Ende der oberen Kammer angeordnete Durchgang in einem schachtelförmigen Einsatz angeordnet sind, der unterhalb der Einfüllöffnung angeordnet ist und sich nur über einen Teil des Behälterquerschnitts erstreckt.

Bei dieser Ausbildung des Komposters kann der schachtelförmige Einsatz in einen Behälter eingesetzt werden, bei dem der Behältermantel von vier, an ihren Seitenrändern durch Steckverbindungen miteinander verbundenen Seitenwänden gebildet wird, die über ihre gesamte Fläche gleichmäßig verteilte Luftdurchtrittsöffnungen aufweisen.

In weiterer Ausgestaltung der Erfindung kann vorgesehen sein, dass die obere Kammer und der am vorderen Ende der oberen Kammer angeordnete Durchgang in einer um eine horizontale Achse verschwenkbaren Wanne angeordnet sind, die unterhalb der Einfüllöffnung angeordnet ist und sich nur über einen Teil des Behälterquerschnitts erstreckt.

Diese Ausbildung erlaubt es, die obere Kammer durch einfaches Verschwenken der Wanne in den belüfteten Sammelraum hinein zu entleeren. Bei verschwenkter Wanne gleiten die organischen Abfälle entlang dem schräg stehenden Boden der Wanne aus der Wanne und aus der oberen Kammer hinaus und in den belüfteten Sammelraum hinein. Nach dem Entleeren der Wanne wird diese wieder in ihre horizontale Lage zurückgeschenkt.

In weiterer Ausgestaltung der Erfindung kann vorgesehen sein, dass die im Inneren des Behälters angeordnete, den Sammelraum begrenzende Trennwand zumindest in ihrer unteren Hälfte als eine elastische, biegsame Platte ausgebildet ist.

Bei dieser Ausbildung des Komposters wird die untere Hälfte des belüfteten Sammelraumes durch die elastische, biegsame, untere Hälfte der Trennwand seitlich begrenzt. Beim Entleeren des Sammelraumes wird die horizontal angeordnete, untere Platte samt dem auf ihr liegenden Materialhaufen verdreht. Dabei wird der Materialhaufen gegen die untere Hälfte der Trennwand gedrückt und die untere Hälfte der Trennwand elastisch deformiert. Die elastische Deformation der unteren Hälfte der Trennwand ist beendet, wenn sich der Materialhaufen von der verdrehten, unteren Platte gelöst hat und in die untere Kammer hinunter gefallen ist.

In weiterer Ausgestaltung der Erfindung kann vorgesehen sein, dass die im Inneren des Behälters angeordnete, den Sammelraum begrenzende Trennwand um eine nahe dem Boden der oberen Kammer angeordnete, horizontale Achse verschwenkbar angeordnet und in einer im wesentlichen vertikalen Arbeitsstellung arretierbar ist.

Diese Ausbildung des Komposters erlaubt es, vor dem Verdrehen der unteren Platte die Trennwand aus ihrer Arretierung zu lösen, sodass die Trennwand beim Verdrehen der unteren Platte durch den auf der unteren Platte liegenden Materialhaufen etwas seitlich verschwenkt wird, sodass der Materialhaufen, wenn er sich von der unteren Platte löst, über eine größeren Bereich der unteren Kammer des Behälters verteilt wird. Wenn der Materialhaufen in der unteren Kammer am Erdboden liegt, wird die untere Platte wieder in eine horizontale Lage verdreht und die Trennwand in ihre Arbeitsstellung zurück bewegt und in dieser arretiert, damit die nachher in den Sammelraum eingebrachten organischen Abfällen die Trennwand nicht zur Seite schwenken und an der unteren Platte vorbei in die untere Kammer des Behälters fallen können.

Erfindungsgemäß kann nahe der unteren Platte eine Arretiereinrichtung vorgesehen sein, die mit einem austauschbaren, über die Innenseite des Behältermantels vorstehenden Arretierelement versehen ist, an dem sich die in ihrer Arbeitsstellung befindliche Trennwand mit ihrer Rückseite abstützt.

Gemäß einem weiteren Merkmal der Erfindung kann nahe dem Boden der oberen Kammer eine im Behältermantel drehbar gelagert Achse vorgesehen sein, die im Behälter mit der schwenkbaren Trennwand starr verbunden ist und einen über den Behältermantel nach außen vorstehenden Achsabschnitt besitzt, mit dem ein der Außenseite des Behälters benachbartes Betätigungselement starr verbunden ist.

Gemäß einem weiteren Merkmal der Erfindung kann der Bewegungsmechanismus eine im Behältermantel drehbar gelagert Achse aufweisen, die im Behälter mit der unteren Platte starr verbunden ist und einen über den Behältermantel nach außen vorstehenden Achsabschnitt besitzt, mit dem die an der Außenseite des Behälters angeordnete Handhabe starr verbunden ist.

Erfindungsgemäß kann eine an der Außenseite des Behältermantels angebrachte Arretiereinrichtung vorgesehen sein, die mit der Handhabe des Bewegungsmechanismus bei in horizontaler Lage angeordneter, unterer Platte in Eingriff bringbar ist.

Die untere Platte kann mit Luftdurchtrittsöffnungen versehen sein. Die untere Platte kann als Stabrost ausgebildet sein.

### Kurze Beschreibung der Zeichnungen

In den Zeichnungen zeigen:
- Fig. 1: einen Komposter im Aufriss,
- Fig. 2: zeigt einen horizontalen Schnitt durch den Komposter von Fig. 1,
- Fig. 3: zeigt einen zweiten Komposter im Aufriss,
- Fig. 4: zeigt einen dritten Komposter im Aufriss,
- Fig. 5: zeigt einen vierten Komposter im Aufriss,
- Fig. 6: zeigt ein Detail einer Behälterwand,
- Fig. 7: zeigt ein weiteres Detail einer Behälterwand,
- Fig. 8: zeigt eine Seitenansicht eines fünften Komposters,
- Fig. 9: zeigt einen sechsten Komposter im Aufriss,
- Fig. 10: zeigt ein Detail des Komposters von Fig. 9, und
- Fig. 11: zeigt die obere Kammer eines erfindungsgemäßen Komposters mit einem in der obere Kammer angeordneten plattenförmigen Schieber.

### Beschreibung von Ausführungsbeispielen

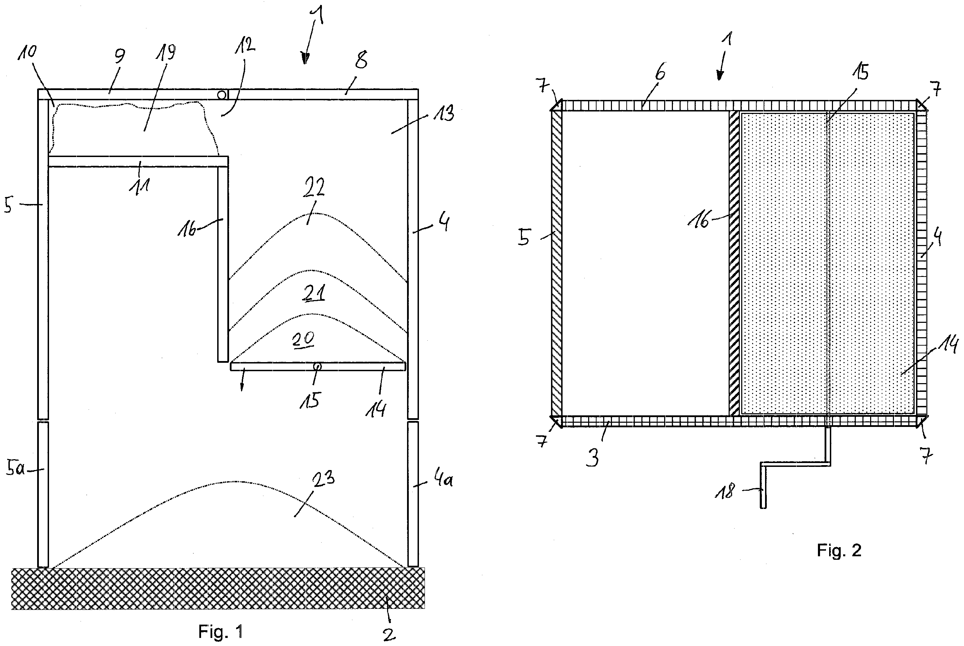

Die Fig. 1 und 2 zeigen einen Komposter mit einem nach unten offenen Behälter 1, der mit seinem offenen, unteren Ende auf dem Erdboden 2 steht. Der Behälter 1 besitzt einen quaderförmigen Innenraum, der von vier Seitenwänden 3, 4, 5, 6 begrenzt ist, die an ihren vertikal verlaufenden Seitenrändern über Steckverbindungen 7 miteinander verbunden sind. Die Seitenwände 3, 4, 5, 6 sind mit in den Zeichnungen nicht dargestellten Luftdurchtrittsöffnungen versehen. Die vier Seitenwände 3, 4, 5, 6 bilden den äußeren Behältermantel. In der unteren Hälfte des Behälters 1 sind zwei Entnahmeöffnungen vorgesehen. Diese befinden sich in zwei einander gegenüberliegenden Seitenwänden 4, 5 und werden durch abnehmbare Wandelemente 4a, 5a dieser Seitenwände 4, 5 verschlossen.

An der Oberseite des Behälters 1 ist eine Deckplatte 8 angeordnet, die den Innenraum des Behälters 1 nach oben abschließt. In der, bezogen auf Fig. 1, linken Hälfte der Deckplatte 8 ist eine Einfüllöffnung vorgesehen, die durch einen Deckel 9 verschließbar ist. Im Innenraum des Behälters 1 ist unterhalb der Einfüllöffnung bzw. unterhalb des Deckels 9 eine nach oben offene, obere Kammer 10 vorgesehen. Die obere Kammer 10 wird im Behälter durch einen Boden 11 nach unten abgeschlossen. Die obere Kammer mündet im Inneren des Behälters 1 über einen seitlichen Auslass 12 in einen neben der oberen Kammer 10 angeordneten, belüfteten Sammelraum 13. Der seitliche Auslass 12 bildet einen, an dem im Inneren des Behälters angeordneten vorderen Ende der oberen Kammer 10 angeordneten Durchgang für die aus der oberen Kammer 10 hinaus zu befördernden Materialchargen.

Der belüftete Sammelraum 13 ist in der, bezogen auf Fig. 1, rechten Hälfte des Behälters 1 untergebracht. Er reicht von der Unterseite der Deckplatte 8 nach unten bis zu einem unteren Höhenniveau, das gegenüber dem Boden 11 der oberen Kammer 10 ein Stück weit nach unten versetzt ist. Er wird an seinem unteren Ende durch eine um eine horizontale Achse verdrehbare, untere Platte 14 begrenzt. Die Drehachse 15 der unteren Platte 14 ist auf dem unteren Höhenniveau angeordnet. Im Behälter 1 wird der Sammelraum 13 durch eine vertikale Trennwand 16 begrenzt. Die Trennwand 16 ist mit in den Zeichnungen nicht dargestellten Luftdurchtrittsöffnungen versehen. Die Trennwand 16 erstreckt sich neben dem Sammelraum 13 nach unten. Sie reicht vom Boden 11 der obere Kammer 10 nach unten bis zum unteren Höhenniveau. Nach außen wird der Sammelraum 13 an drei Seiten von den mit Luftdurchtrittsöffnungen versehenen Seitenwänden 3, 4 und 6 des Behälters 1 begrenzt.

Der Sammelraum 13 stellt einen im Behälter 1 angeordneten, vertikalen Schacht dar, der sich von der Unterseite der Deckplatte 8 weg, an der oberen Kammer 10 vorbei nach unten erstreckt und bei der am unteren Höhenniveau angeordneten, unteren Platte 14 endet.

Der Behälter 1 besitzt eine belüftete, untere Kammer 17, die bis zum unteren Ende des Behälters nach unten reicht. Die untere Kammer 17 ist nach unten zum Erdboden hin offen. Sie wird nach außen durch die Seitenwände 3, 4, 5, 6 des Behälters 1 begrenzt, von denen zwei im Bereich der unteren Kammer 17 mit Entnahmeöffnung versehen sind, die durch ein abnehmbares Wandelement 4a, 5a der betreffenden Seitenwand 4, 5 verschlossen sind.

Die am unteren Ende des Sammelraumes 13 angeordnete, untere Platte 14, ist zwischen dem Sammelraum 13 und der unteren Kammer 17 angeordnet. Die untere Platte 14 ist mit einem Bewegungsmechanismus gekoppelt. Dieser umfasst die horizontal angeordnete Drehachse 15, mit der die untere Platte 15 starr verbundenen ist. Die Drehachse 15 ist in den beiden Seitenwänden 3 und 6 des Behälters 1 drehbar gelagert. Die Drehachse 15 steht über die Seitenwand 3 nach außen vor. Sie ist außerhalb des Behälters 1 mit einer als Kurbel ausgebildeten Handhabe 18 starr verbunden. Durch Drehen an der Kurbel 18 kann die untere Platte 14 zuerst schräg gestellt, dann senkrecht gestellt und auch um 180 Grad verdreht werden.

In Fig. 1 sind die in der oberen Kammer 10, die im belüfteten Sammelraum 13 und die in der belüfteten, unteren Kammer 17 jeweils angeordneten, organischen Abfälle schematisch dargestellt. Die obere Kammer 10 ist mit organischen Abfällen 19 weitgehend gefüllt. Im belüfteten Sammelraum 13 liegt auf der horizontal angeordneten, unteren Platte 14 ein Materialhaufen, bei dem die organischen Abfällen von drei Materialchargen 20, 21, 22 aufeinander liegen. In der belüfteten, unteren Kammer 17 liegt auf dem Erdboden 2 ein aus organische Abfällen bestehender Materialhaufen 23.

Beim Behälter der Fig. 1 ist der am vorderen Ende der oberen Kammer 10 angeordnete Durchgang 12 frei. Der Durchgang 12 kann mit Hilfe eines in der oberen Kammer 10 lose angeordneten, plattenförmigen Schiebers verschlossen werden, der mit seiner Platte vertikal angeordnet in der oberen Kammer 10 verbleibt, während diese mit organischen Abfällen gefüllt wird.

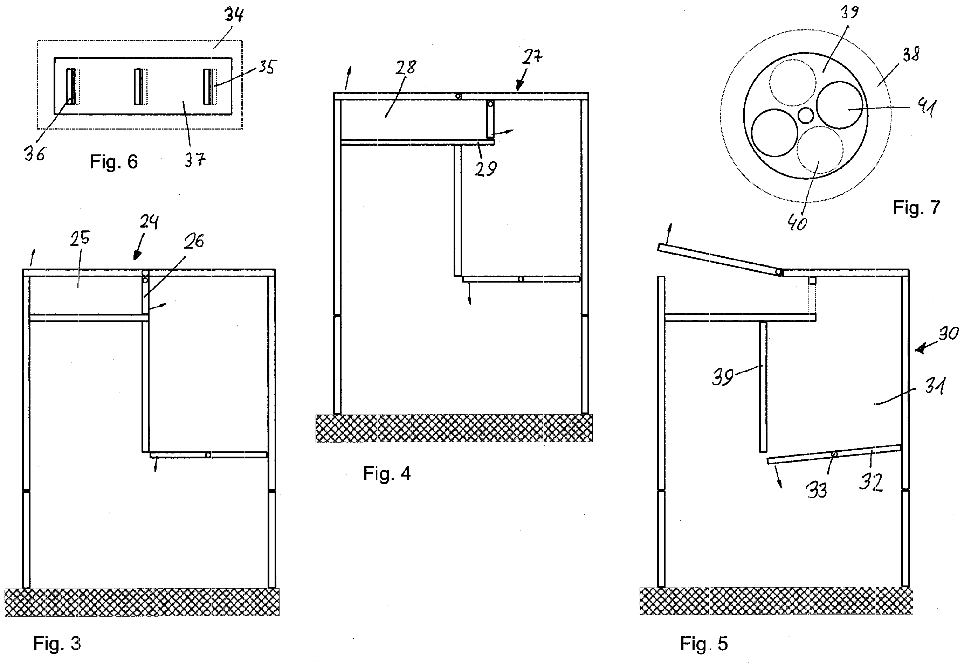

Fig. 3 zeigt einen Komposter 24, der im wesentlichen dem der Fig. 1 und 2 entspricht. Beim Komposter der Fig. 3 ist am vorderen Ende der oberen Kammer 25 eine schwenkbare Klappe 26 angeordnet, die beim Leeren der obere Kammer 25 von den aus der oberen Kammer 25 hinaus geschobenen, organischen Abfällen verschwenkt wird und nach dem Leeren der oberen Kammer 25 wieder selbsttätig in ihre Ausgangsstellung zurückkehrt.

Fig. 4 zeigt einen Komposter 27, der im wesentlichen dem der Fig. 3 entspricht. Beim Komposter 27 erstreckt sich die obere Kammer 28 mit ihrem Boden 29 ein Stück weit in die rechte Hälft des Behälters hinein.

Fig. 5 zeigt einen weiteren Komposter 30, bei dem der konstruktive Aufbau im wesentlichen dem Komposter der Fig. 1 und 2 entspricht. Beim Komposter 30 ist die den belüfteten Sammelraum 31 begrenzende Trennwand 32 aber nicht in der Mitte zwischen linker und rechter Hälfte des Behälters angeordnet, sondern ein Stück weit nach links in die linke Hälfte des Behälters hinein versetzt angeordnet. Der Sammelraum 31 des Komposters 30 ist daher etwas breiter als der Sammelraum 13 des Komposters der Fig. 1 und 2. Beim Komposter 30 ist auch die untere Platte 32, die um die horizontale Drehachse 33 verdrehbar ist, etwas breiter als die untere Platte 14 des Komposters der Fig. 1 und 2.

Bei den Kompostern der Fig. 1 - 5 kann die untere Platte mit Luftdurchtrittsöffnungen versehen sein. Die untere Platte kann aber auch als Rost bzw. als Stabrost ausgebildet sein, auf dem die organischen Abfälle liegen während sie im belüfteten Sammelraum im Zuge der ersten Kompostierungsphase teilweise verrotten und im Volumen deutlich reduziert werden.

Fig. 6 zeigt einen Ausschnitt aus einer Behälterwand 34. Dieser Ausschnitt zeigt drei Luftdurchtrittsöffnungen 35 und einen mit drei Luftdurchtrittsöffnungen 36 versehenen Schieber 37. Durch Verschieben des Schiebers 37 kann der Querschnitt der in der Behälterwand 34 angeordneten Luftdurchtrittsöffnungen 35 verstellt oder die Luftdurchtrittsöffnungen 35 vollständig geschlossen werden.

Fig. 7 zeigt einen Ausschnitt aus einer Behälterwand 38, in der eine drehbare Lüftungsrosette 39 angeordnet ist, die zwei in der Behälterwand 38 angeordnete, kreisförmige Luftdurchtrittsöffnungen 40 abdeckt und selbst zwei kreisförmige Luftdurchtrittsöffnungen 41 besitzt.

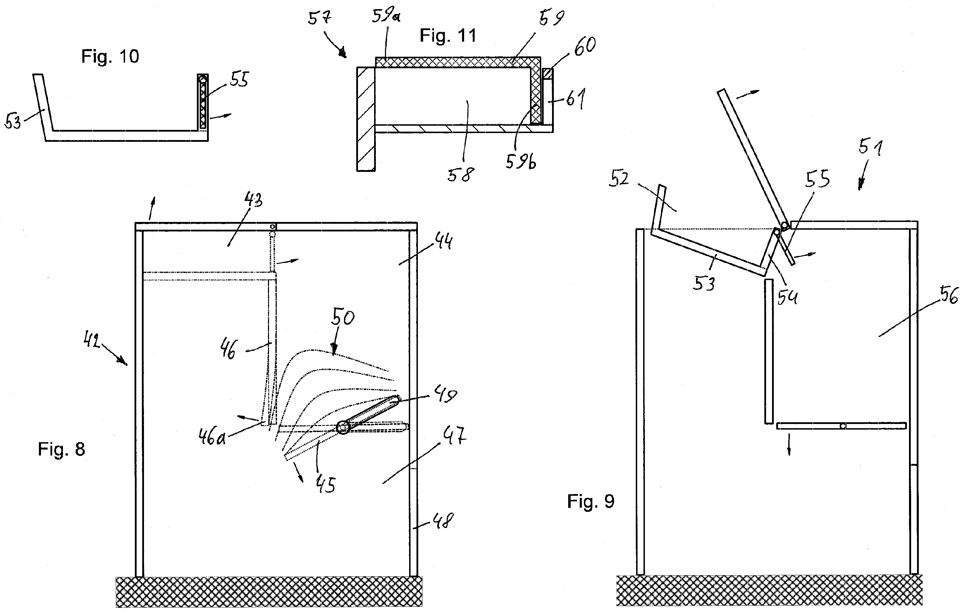

Fig. 8 zeigt in einer Seitenansicht einen weiteren erfindungsgemäßen Komposter 42 mit einer oberen Kammer 43, einem belüfteten Sammelraum 44, einer verdrehbaren, unteren Platte 45, einer inneren Trennwand 46, einer unteren Kammer 47 und einer seitlichen Entnahmeöffnung 48, in einer die untere Kammer 47 seitlich begrenzenden Seitenwand des Behälters. Die innere Trennwand 46 besitzt eine als elastische, biegsame Platte ausgebildete untere Hälfte 46a. Die verdrehbare, untere Platte 45 ist mit einem Bewegungsmechanismus mechanisch gekoppelt, der über einen an der Außenseite des Komposters 42 angeordneten, einarmigen Hebel 49 betätigt wird. Dieser Hebel 49 nimmt an der Außenseite des Komposters 42 die gleiche Lage ein, wie die im Inneren des Komposters 42 angeordnete, verdrehbare, untere Platte 45. In Fig. 8 ist die horizontale Lage des Hebels 49 und der unteren Platte 45 dargestellt und ebenso eine gegenüber der horizontalen Lage etwas verdrehte Schräglage des Hebels 49 und der unteren Platte 45. Fig. 8 zeigt einen auf der schräg angeordneten, unteren Platte 45 liegenden Materialhaufen 50, der gegen die elastische, biegsame untere Hälfte 46a der inneren Trennwand 46 drückt und diese elastisch deformiert.

Fig. 9 zeigt einen weiteren erfindungsgemäßen Komposter 51. Bei diesem ist die obere Kammer 52 in einer schwenkbaren Wanne 53 angeordnet, die einen am vorderen Ende der oberen Kammer 52 angeordneten Durchgang 54 vorsieht, der durch eine schwenkbare Klappe 55 verschlossen werden kann. Fig. 9 zeigt die mit dem hinteren Ende nach oben verschwenkte Wanne 53 in der für das Entleeren der obere Kammer 52 vorgesehen Schräglage. Die nicht dargestellten organische Abfälle rutschen aus der Wanne 53 in den belüfteten Sammelraum 56 des Komposters 51. Fig. 10 zeigt die Wanne 53 des Komposters 51 in ihrer horizontalen Lage.

Fig. 11 zeigt ein Detail eines Komposters 57 mit einer oberen Kammer 58 und einem in dieser angeordneten, plattenförmigen Schieber 59. Der Schieber 59 besitzt einen Handgriff 59a und liegt mit der an seinem vorderen Ende angeordneten Platte 59b gegen ein Wandelement 60 an, das die obere Kammer 58 an ihrem vorderen Ende abschließt und einen Durchgang 61 für die organischen Abfälle enthält.

## Patentansprüche

1. Komposter, enthaltend:
(a) einen nach unten offenen, am Erdboden (2) aufstehenden Behälter (1),
(b) eine an der Oberfläche des Behälters (1) angeordnete Einfüllöffnung, die durch einen Deckel (9) verschließbar ist,
(c) eine im Behälter durch einen Boden (11) nach unten abgeschlossene obere Kammer (10) zum Sammeln von zu kompostierendem Material, die unterhalb der Einfüllöffnung angeordnet ist,
**dadurch gekennzeichnet, dass** der Komposter ferner enthält
(d) eine erste Kompostierungskammer, die als ein belüfteter, vertikaler Schacht (13) ausgebildet ist, der sich vom oberen Ende des Behälters (1) an einem im Behälter angeordneten seitlichen Auslass (12) der oberen Kammer (10) vorbei nach unten erstreckt und an seinem, unteren Schachtende durch eine horizontal angeordnete, untere Platte (14) begrenzt wird, die zum Entleeren des Schachts (13) um eine horizontale Achse (15) verschwenkbar ist,
(e) einen mit der unteren Platte (14) mechanisch gekoppelten Bewegungsmechanismus, der mit einer an der Außenseite des Behälters (1) angeordneten Handhabe (18) versehen ist,
(f) eine unmittelbar über dem Erdboden (2) angeordnete, nach unten offene, belüftete, zweite Kompostierungskammer (17), an deren Oberseite die untere Platte (14) angeordnet ist, und
(g) eine neben der zweiten Kompostierungskammer (17) angeordnete, verschließbare, seitliche Entnahmeöffnung für kompostiertes Material.

2. Komposter nach Anspruch 1, **dadurch gekennzeichnet, dass** der Komposter eine im Behälter angeordnete, den vertikalen Schacht seitlich begrenzende Trennwand (16, 39, 46) besitzt, die mit Luftdurchtrittsöffnungen versehen ist.

3. Komposter nach Anspruch 2, **dadurch gekennzeichnet, dass** die Trennwand (46) zumindest in ihrer unteren Hälfte als elastische, biegsame Platte (46a) ausgebildet ist.

4. Komposter nach Anspruch 2, **dadurch gekennzeichnet, dass** die Trennwand (16, 39, 46) um eine horizontale Achse verschwenkbar ist, und im Behälter (1) in einer im Wesentlichen vertikalen Lage arretierbar ist.

5. Komposter nach Anspruch 4, **dadurch gekennzeichnet, dass** am unteren Schachtende des vertikalen Schachtes (13) eine Arretiereinrichtung für die schwenkbare Trennwand (16, 39, 46) vorgesehen ist.

6. Komposter nach Anspruch 4 oder 5, **dadurch gekennzeichnet, dass** ein mit der verschwenkbaren Trennwand (16, 39, 46) mechanisch gekoppelter Bewegungsmechanismus vorgesehen ist, der mit einer an der Außenseite des Behälters angeordneten Handhabe versehen ist.

7. Komposter nach einem der vorhergehenden Ansprüche, **dadurch gekennzeichnet, dass** unterhalb der Einfüllöffnung ein schachtelförmiger Einsatz vorgesehen ist, der die unbelüftete Kammer samt ihrem im Behälter (1) angeordneten seitlichen Auslass enthält.

8. Komposter nach einem der Ansprüche 1 bis 6, **dadurch gekennzeichnet, dass** unterhalb der Einfüllöffnung eine um eine horizontale Achse verschwenkbare Wanne (53) vorgesehen ist, die die unbelüftete Kammer (52) samt ihrem im Behälter angeordneten, seitlichen Auslass (54) enthält.

9. Komposter nach einem der vorhergehenden Ansprüche, **dadurch gekennzeichnet, dass** der seitliche Auslass (12, 54) mit einer vorzugsweise in Schließstellung vorgespannten, beweglichen Klappe (26, 55) verschließbar ist, die vorzugsweise in ihrer Schließstellung arretierbar ist.

10. Komposter nach einem der Ansprüche 1 bis 7, **dadurch gekennzeichnet, dass** der seitliche Auslass (61) mit einem plattenförmigen Schieber (59) verschließbar ist, der vorzugsweise einen Handgriff (59a) aufweist.

11. Komposter nach einem der vorhergehenden Ansprüche, **dadurch gekennzeichnet, dass** die untere Platte (14) mit einer im Behälter (1) drehbar gelagerten Achse (15) starr verbunden ist, die einen über die Außenseite des Behälters (1) vorstehenden Achsabschnitt besitzt, mit dem die insbesondere als einarmiger Hebel (49) oder Kurbel (18) ausgebildete Handhabe des Bewegungsmechanismus starr verbunden ist.

12. Komposter nach einem der vorhergehenden Ansprüche, **dadurch gekennzeichnet, dass** eine an der Außenseite des Behälters (1) angebrachte Arretiereinrichtung vorgesehen ist, die mit der Handhabe (18, 49) des Bewegungsmechanismus bei in horizontaler Lage angeordneter, unterer Platte (14, 45) in Eingriff bringbar ist.

13. Komposter nach einem der vorhergehenden Ansprüche, **dadurch gekennzeichnet, dass** die untere Platte (14, 45) mit Luftdurchtrittsöffnungen versehen ist, insbesondere als Stabrost ausgebildet ist.

14. Komposter nach einem der vorhergehenden Ansprüche, **dadurch gekennzeichnet, dass** der Behälter (1) im äußeren Behältermantel (34, 38) Luftdurchtrittsöffnungen (35, 40) aufweist, die vorzugsweise verstellbar sind.

## Claims

1. A composter, containing:
(a) a container (1) which is open at the bottom and stands on the ground (2),
(b) a filling opening which is situated on the surface of the container (1) and can be closed by a cover (9),
(c) an upper chamber (10) which is terminated at the bottom by a shelf (11) in the container, for collecting material to be composted, said upper chamber being situated below the filling opening,
**characterised in that** the composter also contains
(d) a first composting chamber which is in the form of a ventilated, vertical shaft (13) which extends downwards from the upper end of the container (1) past a lateral outlet (12), situated in the container, of the upper chamber (10) and is delimited at the lower shaft end by a horizontally arranged lower plate (14) which is pivotable about a horizontal axis (15) to empty the shaft (13),
(e) a movement mechanism which is mechanically coupled to the lower plate (14) and is provided with a handle (18) which is situated on the outside of the container (1),
(f) a ventilated second composting chamber (17) which is situated directly above the ground (2) and is open at the bottom and at the top of which the lower plate (14) is situated, and
(g) a closable, lateral removal opening for composted material, said opening being situated adjacently to the second composting chamber (17).

2. The composter according to Claim 1,
**characterised in that**
the composter has a partition (16, 39, 46) which is situated in the container, laterally delimits the vertical shaft and is provided with air holes.

3. The composter according to Claim 2,
**characterised in that**
the partition (46) is in the form of an elastic, flexible plate (46a), at least in the lower half thereof.

4. The composter according to Claim 2,
**characterised in that**
the partition (16, 39, 46) is pivotable about a horizontal axis and can be locked in a substantially vertical position in the container (1).

5. The composter according to Claim 4,
**characterised in that**
a locking device for the pivotable partition (16, 39, 46) is provided at the lower shaft end of the vertical shaft (13).

6. The composter according to Claim 4 or 5,
**characterised in that**
a movement mechanism is provided which is mechanically coupled to the pivotable partition (16, 39, 46) and is provided with a handle which is situated on the outside of the container.

7. The composter according to any one of the preceding claims,
**characterised in that**
underneath the filling opening there is a box-shaped insert which contains the non-ventilated chamber including the lateral outlet thereof situated in the container (1).

8. The composter according to any one of Claims 1 to 6,
**characterised in that**
underneath the filling opening a tub (53) is provided which is pivotable about a horizontal axis and contains the non-ventilated chamber (52) including the lateral outlet (54) thereof situated in the container.

9. The composter according to any one of the preceding claims,
**characterised in that**
the lateral outlet (12, 54) can be closed with a movable flap (26, 55) which is preferably preloaded into the closed position and preferably can be locked in the closed position.

10. The composter according to any one of Claims 1 to 7,
**characterised in that**
the lateral outlet (61) can be closed with a planar slide (59) which preferably has a hand grip (59a).

11. The composter according to any one of the preceding claims,
**characterised in that**
the lower plate (14) is rigidly connected to an axis (15) which is mounted rotatably in the container (1) and has an axis section which protrudes from the outside of the container (1) and to which the handle, in particular in the form of a single-armed lever (49) or crank (18), of the movement mechanism is rigidly connected.

12. The composter according to any one of the preceding claims,
**characterised in that**
a locking device is provided which is attached to the outside of the container (1) and can be brought into engagement with the handle (18, 49) of the movement mechanism when the lower plate (14, 45) is in the horizontal position.

13. The composter according to any one of the preceding claims,
**characterised in that**
the lower plate (14, 45) is provided with air holes and is in particular in the form of a grating.

14. The composter according to any one of the preceding claims,
**characterised in that**
the container (1) has air holes (35, 40), which are preferably adjustable, in the outer container jacket (34, 38).

## Revendications

1. Composteur, comportant :
(a) un conteneur (1) ouvert sur le dessous, placé debout sur la terre (2),
(b) une ouverture de remplissage placée sur la surface du conteneur (1), qui peut se fermer par un couvercle (9),
(c) un compartiment supérieur (10), fermé sur le dessous dans le conteneur par un fond inférieur (11), destiné à collecter des matières à composter, qui est placé en-dessous de l'ouverture de remplissage,
**caractérisé en ce que** le composteur comporte par ailleurs
(d) un premier compartiment de compostage, qui est conçu sous la forme d'un puits (13) vertical ventilé, qui s'étend vers le bas, à partir de l'extrémité supérieure du conteneur (1) en passant devant une sortie latérale (12) du compartiment supérieur (10) placée dans le conteneur et qui sur son extrémité inférieure de puits est délimité par un panneau inférieur (14), placé à l'horizontale, qui pour la vidange du puits (13), est susceptible de pivoter autour d'un axe horizontal (15),
(e) un mécanisme de déplacement, mécaniquement accouplé avec le plateau inférieur (14), qui est muni d'une manette (18) placée sur la face extérieure du conteneur (1),
(f) un deuxième compartiment de compostage (17), placé directement au-dessus de la terre (2), ouvert sur le bas, ventilé, sur la face supérieure duquel est placé le panneau inférieur (14) et
(g) une ouverture de prélèvement latérale de matière compostée, placée à côté du deuxième compartiment de compostage (17) susceptible d'être fermée.

2. Composteur selon la revendication 1, **caractérisé en ce que** le composteur est pourvu d'une paroi de séparation (16, 39, 46) placée dans le conteneur, délimitant latéralement le puits vertical, qui est munie de perforations de passage d'air.

3. Composteur selon la revendication 2, **caractérisé en ce qu'**au moins dans sa moitié inférieure, la paroi de séparation (46) est conçue sous la forme d'un panneau (46a) élastique, souple.

4. Composteur selon la revendication 2, **caractérisé en ce que** la paroi de séparation (16, 39, 46) est susceptible de pivoter autour d'un axe horizontal et est susceptible d'être bloquée dans le conteneur (1) dans une position sensiblement verticale.

5. Composteur selon la revendication 4, **caractérisé en ce que** sur l'extrémité inférieure de puits du puits (13) vertical est prévu un système de blocage pour la paroi de séparation (16, 39, 46) pivotante.

6. Composteur selon la revendication 4 ou 5, **caractérisé en ce qu'**il est prévu un mécanisme de déplacement, mécaniquement accouplé avec la paroi de séparation (16, 39, 46) pivotante, qui est muni d'une manette, placée sur la face extérieure du conteneur.

7. Composteur selon l'une quelconque des revendications précédentes, **caractérisé en ce qu'**en-dessous de l'ouverture de remplissage, il est prévu un insert en forme de boîte qui contient le compartiment non ventilé, avec sa sortie latérale placée dans le conteneur (1).

8. Composteur selon l'une quelconque des revendications 1 à 6, **caractérisé en ce qu'**en-dessous de l'ouverture de remplissage, il est prévu une cuve (53) susceptible de pivoter autour d'un axe horizontal qui contient le compartiment (52) non ventilé, avec sa sortie latérale (54) placée dans le conteneur.

9. Composteur selon l'une quelconque des revendications précédentes, **caractérisé en ce que** la sortie latérale (12, 54) est susceptible d'être fermée par un clapet (26, 55) mobile, précontraint de préférence dans la position de fermeture qui est susceptible d'être bloqué de préférence dans sa position de fermeture.

10. Composteur selon l'une quelconque des revendications 1 à 7, **caractérisé en ce que** la sortie latérale (61) est susceptible d'être fermée par un coulisseau (59) en forme de plaque, qui comporte de préférence une poignée (59a).

11. Composteur selon l'une quelconque des revendications précédentes, **caractérisé en ce que** le panneau inférieur (14) est assemblé de manière rigide avec un axe (15) logé en rotation dans le conteneur (1), qui est pourvu d'un segment d'axe débordant au-delà de la face extérieure du conteneur (1), avec lequel la manette du mécanisme de déplacement, conçue notamment sous la forme d'un levier (49) ou manivelle (18) à un seul bras est reliée de manière rigide.

12. Composteur selon l'une quelconque des revendications précédentes, **caractérisé en ce qu'**il est prévu un système de blocage monté sur la face extérieure du conteneur (1), qui est susceptible d'être amené en engagement avec la manette (18, 49) du mécanisme de déplacement, lorsque le panneau inférieur (14, 45) est placé en position horizontale.

13. Composteur selon l'une quelconque des revendications précédentes, **caractérisé en ce que** le panneau inférieur (14, 45) est muni de perforations de passage d'air, est notamment conçu sous la forme d'une grille à barreaux.

14. Composteur selon l'une quelconque des revendications précédentes, **caractérisé en ce que** dans l'enveloppe extérieure (34, 38) de conteneur, le conteneur (1) comporte des perforations de passage d'air (35, 40) qui sont de préférence réglables.
